# EUROPEAN PATENT SPECIFICATION

(11) **EP 1 509 478 B1**
(45) Date of publication and mention of the grant of the patent: **06.09.2006**
(21) Application number: 03724537.0
(22) Date of filing: 12.05.2003
(51) Int. Cl.: C03B 37/08

(54) **FIBER FORMING BUSHING ASSEMBLY HAVING FLANGE SUPPORT**
GLASFASERSPINNDÜSE MIT EINER PLATTENVERANKERUNG
FOUR-FILIERE DE FORMATION DE FIBRES PRESENTANT UN SUPPORT DE BOURRELET

(30) Priority: 31.05.2002 US 160774
(43) Date of publication of application: 02.03.2005
(73) Proprietor: OWENS CORNING, Toledo, Ohio 43659 (US)
(72) Inventor: SULLIVAN, Timothy, A., Newark, OH 43055 (US); BEMIS, Byron, L., Newark, OH 43055 (US)
(74) Representative: Jacob, Reuben Ellis
(86) International application number: PCT/US2003/014620
(87) International publication number: WO 2003/101901

(56) References cited:
- EP-A- 1 193 225
- US-A- 3 982 915
- US-A- 4 146 373
- US-A- 4 351 656
- US-A- 5 948 135

## Description

### BACKGROUND OF THE INVENTION

This invention relates in general to fiber forming bushing assemblies and more particularly to a fiber forming bushing assembly having a flange support.

Fiber forming bushing assemblies are well known in the prior art. An example of a prior art bushing assembly is disclosed in European Patent Application No. EP 1 193 225. A similarly structured bushing is illustrated in Fig. 1. The bushing assembly shown comprises a bushing 16, a frame 18 about the bushing 16, and a refractory material 20 between the bushing 16 and the frame 18. A throat 30 is provided at the top of the bushing 16. A flange 34 is provided about the throat 30. A cooling coil 40 is attached to the flange 34. The bushing 16 has a body 21 that is defined in a lateral direction by opposing end plates 22 and in a longitudinal direction by elongate side walls 24. The end plates 22 extend downward in a generally vertical direction. Upper portions 38 of the side walls 24 are slanted or angled outward and beneath the flange 34 while lower portions of the side walls 24 extend downward in a generally vertical direction.

In a fiber forming operation, the bushing assembly is secured beneath a bushing block 12 at a forming position by clamping the frame 18 to a forehearth steel (not shown). The flange 34 is adapted to engage an underside of the bushing block 12- Molten glass G flows from the bushing block 12 into the throat 30 of the bushing 16. The molten glass G exits the bushing 16 (for example, as glass fibers F) through tip plates 26 provided at the bottom of the bushing 16.

Ideally, the flange 34 extends perpendicularly from the throat 30 and parallel relative to the underside of the bushing block 12. An upper surface of the flange 34 is adapted to engage the underside of the bushing block 12 so as to provide a seal between the flange 34 and the bushing block 12 to prevent molten glass G from escaping or leaking between the flange 34 and the bushing block 12. In some instances, a small amount of molten glass G may leak between the flange 34 and the bushing block 12. However, the temperature of this small amount of glass G drops significantly as it passes between the flange 34 and the bushing block 12 and approaches the cooling coil 40 (that is, heat for the molten glass G dissipates into the cooling coil 40). Molten glass G that reaches the edge of the flange 34 is solidified due to the effect of the cooling coil 40. The solidified glass forms a seal to prevent the molten glass G from flowing any further.

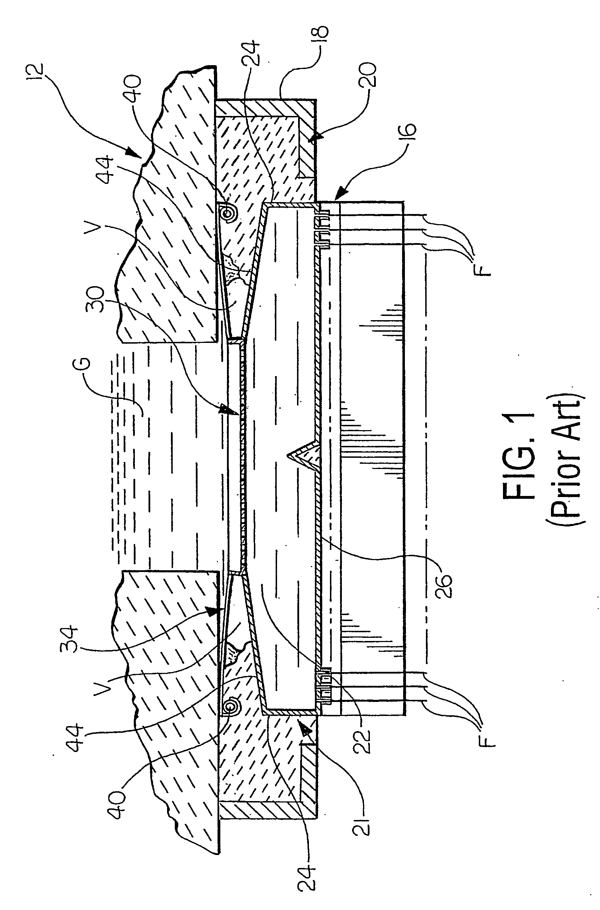

Various size bushings are required, depending on the production requirements (for example, the number of fibers F being formed). The bushing 16 shown has two tip plates 26 and, consequently, is a wider bushing. That is to say, the bushing 16 has greater dimension from front to back or a lateral direction of the bushing 16 (from left to right, or vice versa, when viewing Fig. 1). The upper portion 44 of each side wall 24 of this bushing 16 is at a tighter angle relative to the flange 34 than a narrower bushing. Therefore, very little clearance is provided between the flange 34 and the cooling coil 40 and the upper portion 44 of each side wall 24. Consequently, it is more difficult to ensure continuous backfill of refractory material 20 in the area or cavity defined between the flange 34 and the cooling coil 40 and the upper portion 44 of each side wall 24. A more continuous backfill can be achieved by raising the moisture content of the refractory material 20. However, an increased moisture level of the refractory material 20 has an adverse affect on the strength and integrity of the refractory material 20. Such refractory material tends to crack and separate from the bushing 16 and frame 18, resulting in premature failure of the bushing 16.

A discontinuous backfill results in the presence of voids V in the refractory material 20. The voids V weaken the support provided by the refractory material 20. Downward forces from the molten glass G against the bushing screen, clamping pressure, and gravitational force cause plastic and/or creep deformation of the flange 34 and the upper portion 44 of each side 24. This causes the flange 34 to separate or pull away from the bushing block 12, as illustrated in Fig. 1 of the prior art. When the flange 34 separates from the bushing block 12, more molten glass G can penetrate between the flange 34 and the bushing block 12. As the amount of molten glass G penetrating between the flange 34 and the bushing block 12 increases, the molten glass G does not cool sufficiently by the time it reaches the edge of the flange 34. Consequently, the molten glass G between the flange 34 and the bushing block 12 is at a heightened temperature. The cooling coil 40 is not designed to cool molten glass G at the heightened temperature. Consequently, the molten glass G leaks beyond the edge of the flange 34 and the cooling coil 40 and results in a premature failure of the bushing 16.

What is needed is a support that provides greater subj acent support for the peripheral flange in a longitudinal direction of the bushing to prevent the flange from sagging and thus prevent molten glass from leaking between the flange and the bushing block, thereby eliminating premature failures and prolonging the life of the bushing.

### SUMMARY OF THE INVENTION

The present invention is directed toward a fiber forming bushing assembly comprising a bushing and a support. The bushing includes a bushing body and a flange. The bushing body is defined at least in part by a throat and a side wall beneath the throat. The side wall has an upper portion. The flange extends from the throat. The support is positioned between the flange and an upper portion of the side wall. The support is formed of a ceramic material.

The present invention is also directed toward a fiber forming bushing assembly having a bushing body defined at least in part by a throat, opposing end plates extending in a lateral direction, and elongated side walls extending in a longitudinal direction. The end plates and side walls are beneath the throat. Each side wall has an upper portion. The flange extends from the throat. The flange comprises a lateral portion and an elongate portion. A support is positioned between each of the elongate portions of the flange and the upper portion of a corresponding one of the side walls. Each support is formed of a ceramic material.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a side elevational view of a prior art bushing.
Fig. 2 is a side elevational view of a bushing according to a preferred embodiment of the invention.

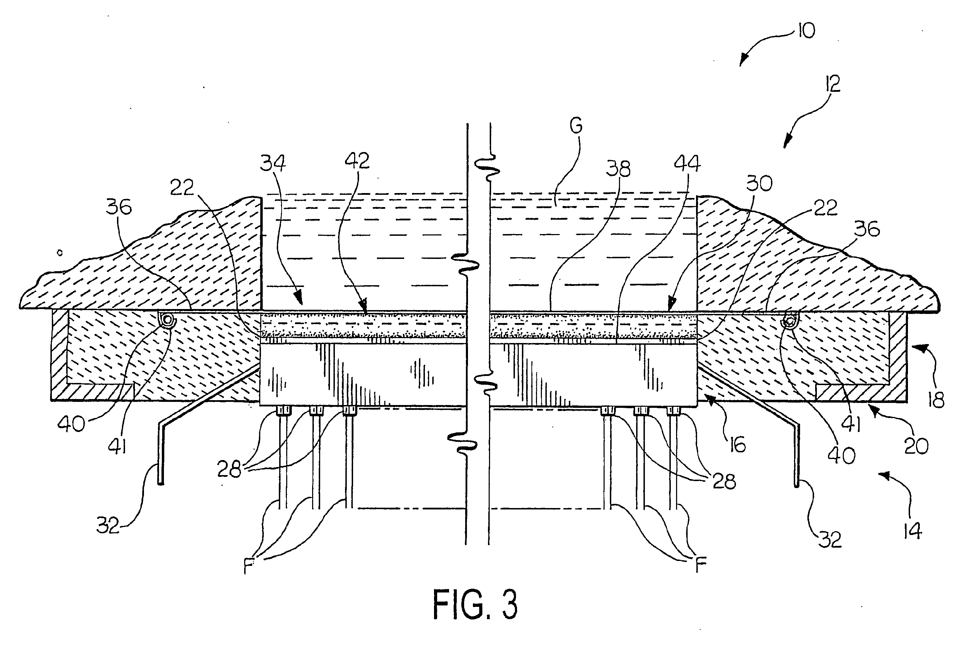

Fig. 3 is a front elevational view of the bushing shown in Fig. 2.
Fig. 4 is an enlarged perspective view of the flange support according to a preferred embodiment of the invention.

### DETAILED DESCRIPTION OF THE PREFERRED EMBODIMENT

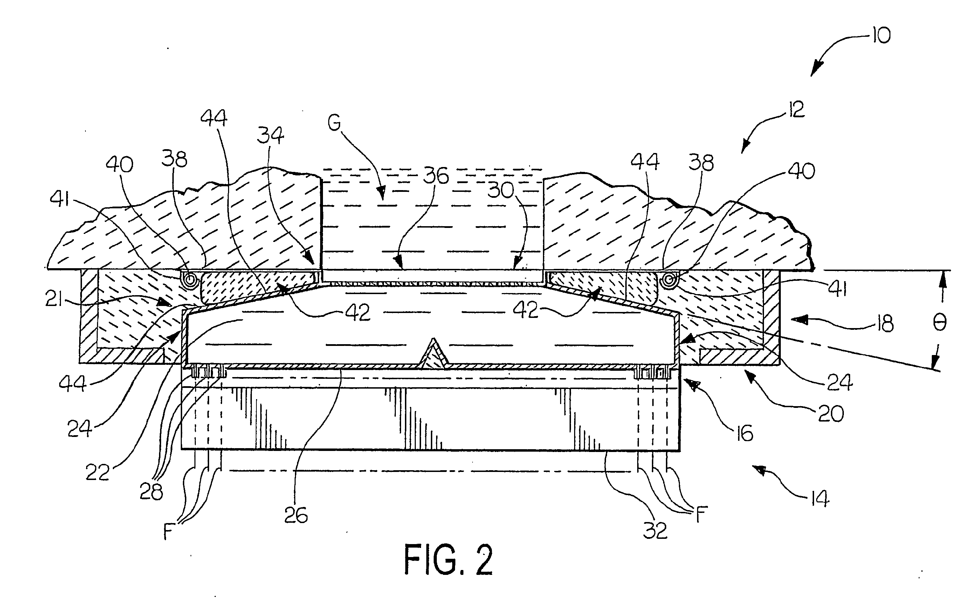

Referring now to the drawings, there is illustrated in Fig. 2 a fiber forming position 10 comprising a bushing block 12 and a bushing assembly 14. The bushing assembly 14 basically comprises a bushing 16, a frame 18 about the bushing 16, and a refractory material 20 (for example, a castable refractory material) between the frame 18 and the bushing 16. The frame 18 is secured beneath the bushing block 12 by clamping the frame 18 to a forehearth steel (not shown). Molten glass G is supplied to the bushing 16 through the bushing block 12. The molten glass G passes through the bushing 16 and exits the bushing 16 in the form of fibers F (for example, glass fibers).

The bushing 16 is basically comprised of an electrically conductive bushing body 21 and an electrically conductive screen located within the bushing body 21. In a preferred embodiment of the invention, the bushing body 21 is in the form of a metal box having an elongate, substantially rectangular shape. The bushing body 21 is defined in part by opposing end plates 22 and elongate side walls 24 extending between the end plates 22. The bottom of the bushing body 21 is defined by a tip plate 26 having a plurality of orifices (not shown) formed therein, preferably including tubular members 28, as described in commonly-assigned U.S. Patent No. 4,161,646. The tip plate 26 extends in a side to side or longitudinal direction between the end plates 22 and a front to rear or lateral direction between the side walls 24. An opening is provided at the top of the bushing body 21 for receiving the molten glass G from the bushing block 12. The opening is defined by a throat 30.

A pair of opposing electrical terminals or ears 32 is attached to the opposing end plates 22. The ears 32 are adapted to be connected to a source of current (not shown). Current is adapted to flow through the ears 32 and further into and through the bushing body 21 to resistance heat the bushing body 21 and thereby maintain the glass G under the desired thermal condition.

A flange 34 extends from the throat 30 at the top of the bushing body 21. The flange 34 includes a lateral portion 36 that extends in the lateral direction adjacent each of the end plates 22 and an elongate portion 38 that extends in the longitudinal direction adjacent each of the elongate side walls 24. The flange 34 engages an underside of the bushing block 12 to form a seal between the bushing block 12 and the flange 34 to prevent molten glass G from escaping or leaking from between the bushing block 12 and the flange 34.

To further reduce the risk that molten glass G will escape from between the bushing block 12 and the flange 34, a cooling coil 40 is attached to the flange 34 (for example, with metal tabs 41 that are welded to the flange 34). In a preferred embodiment of the invention, the cooling coil 40 is a continuous cooling coil that is attached to an outer peripheral edge of the flange 34.

In accordance with the present invention, a support 42 is positioned beneath the flange 34 in an area or cavity defined between each elongate portion 38 of the flange 34 and an upper portion 44 of each side wall 24. The support 42 is positioned juxtaposed the throat 30 of the bushing body 21 and beneath the flange 34 to provide lateral support for the throat 30 and subjacent support for the flange 34.

The upper portion 44 of each side wall 24 is disposed at an acute angle θ relative to the corresponding elongate portion 38 of the flange 34. The measure of the angle θ depends at least in part upon the width W of the bushing body 21. That is to say, the measure of the angle θ is inversely proportional to the width W of the bushing body 21, assuming a constant bushing height and throat width.

The support 42 is shaped and dimensioned to fit between each elongate portion 38 of the flange 34 and the upper portion 44 of each side wall 24. Consequently, the support 42 is preferably wedge-shaped. In a preferred embodiment of the invention, the support 42 has a shape complementary to that of the cavity provided between each elongate portion 38 of the flange 34 and the upper portion 44 of each side wall 24. Moreover, the support 42 is dimensioned to fit closely relative to each elongate portion 38 of the flange 34 and the upper portion 44 of each side wall 24. The support 42 preferably fits flush against each elongate portion 38 of the flange 34 and the upper portion 44 of each side wall 24 or up to within 0.0625 inch (1.5875 millimeters) of each elongate portion 38 of the flange 34 and the upper portion 44 of each side wall 24.

The shape of the support 42 depends at least in part upon the shape of the cavity defined between each elongate portion 38 of the flange 34 and the upper portion 44 of each side wall 24. The shape of this cavity depends upon shape of the bushing body 21. For example, the throat 30 is preferably substantially vertical. The flange 34 is preferably at about a right angle relative to the throat 30. The upper portion 44 of each side wall 24 is vertically spaced from the flange 34 by the vertical dimension of the throat 30. The upper portion 44 of each side wall 24 is oriented at an acute angle θ relative to the flange 34. As stated above, the measure of the angle θ is inversely proportional to the width of the bushing 16. If the cooling coil 40 is mounted to the underside of the flange 34, then the shape of the support 42 can further depend at least in part upon the space provided between the throat 30 and the cooling coil 40.

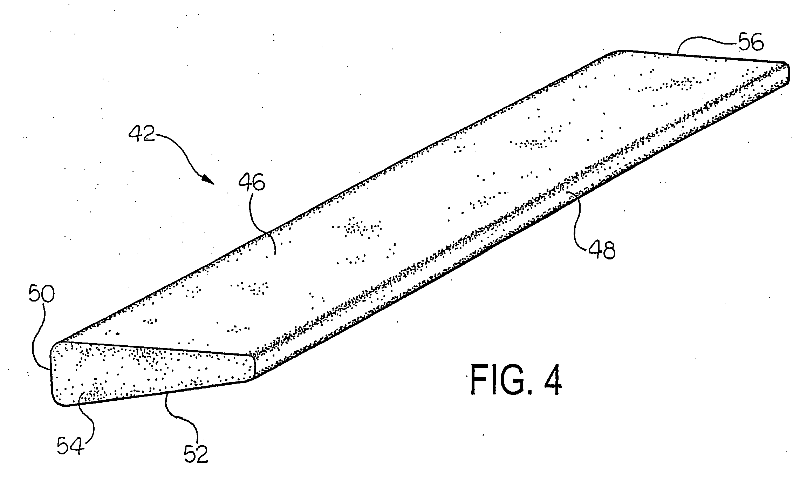

An example of a support 42 according to a preferred embodiment of the invention is illustrated in Fig. 4. The support 42 shown has a cross-section that is polygonal in shape. It has an upper surface 46 and an inner surface 48 which preferably extends downward from the upper surface 46 at about a right angle relative to the upper surface 46. An outer surface 50 of the support 42 preferably extends downward from the upper surface 46 and at about a right angle relative to the upper surface 46 and substantially parallel to the inner surface 48. A lower surface 52 of the support 42 extends between the inner and outer surfaces 48, 50. The lower surface 52 extends at an obtuse angle relative to the inner surface 48 and an acute angle relative to the outer surface 50. The upper surface 46 is adapted to engage the underside of the flange 34. The inner surface 48 is adapted to engage the throat 30. The lower surface 52 is adapted to engage the upper portion 44 of the side wall 24. The length of the support 42 depends at least in part upon the longitudinal dimension of the bushing 16. The width or lateral dimension of the upper surface 46 depends at least in part upon the width or lateral dimension of the flange 34 and the distance between the throat 30 and the cooling coil 40. The vertical dimension of the inner surface 48 depends upon the vertical dimension of the throat 30. The dimensions of the outer surface 50 and the lower surface 52 depend at least in part upon the dimension of the upper portion 44 of the side wall 24, which is largely dependent upon its angle θ.

It should be clearly understood by one of ordinary skill in the art of the invention that the shape of the support 42 can vary and that the present invention is not intended to be limited to the shape shown and described. For example, the outer surface 50 of the support 42 may extend at an acute or obtuse angle relative to the upper surface 46. The support 42 can have rounded corners, as shown, or relatively sharp corners (not shown). Moreover, the ends 54, 56 of the support 42 can be squared off, as shown, or, although not shown, rounded, similar to the rounded corners. It should also be understood that the outer surface 50 can have a relief (not shown) for receiving the cooling coil 40.

The support 42 is preferably formed from a non-deteriorating material that has a resistance to high temperature and a high tensile strength. The material is preferably resistant to high temperatures, for example, in a range of about 2,100 to 2,900 degrees Fahrenheit (1,149 to 1,593 Celsius). The modulus of rupture (MOR) of the support 42 preferably exceeds that of the refractory material 20. The MOR of the refractory material 20 is in the range of about 200 to 1000 pounds per square inch (PSI) (140 to 703 kilopascals). A support 42 according to a preferred embodiment of the invention would have a MOR of several thousand PSI.

In the most preferred embodiment of the invention, the support 42 is extruded from a ceramic material, such as mullite, zircon, alumna, or an equivalent thereto. Such materials have tensile strengths capable of withstanding stress endured by the elongate portion 38 of the flange 34 over its entire span and maintaining rigidity during the service life of the bushing 16.

It should be appreciated by one of ordinary skill in the art of the invention that the support 42 may be formed from a high temperature-high strength material other than a ceramic material. Moreover, the support 42 may be formed from a composite material, such as a ceramic matrix with a high temperature-high strength fiber reinforcement.

In the preferred embodiment of the invention, the cooling coil 40 is mounted to an underside of the flange 32 so that a support 42 is held in place between each elongate portion 38 of the flange 34 and the upper portion 44 of each side wall 24 by the cooling coil 40. In this way, the cooling coil 40 holds a support 42 between each elongate portion 38 of the flange 34 and the upper portion 44 of each side wall 24 while the refractory material 20 is cast and permitted to set up. It should be clearly understood that, after the refractory material 20 sets up, the refractory material 20 holds the support 42 in place.

The support 42 provides a continuous rigid structural support for the upper end of the bushing 16 and, more particularly, the throat 30 and each elongate portion 38 of the flange 34. The support 42 fits tightly in the clearance provided between each elongate portion 38 of the flange 34 and the upper portion 44 of each side wall 24. The support 42 maintains the rigidity and shape of the throat 30 and the flange 34 during the operation of the bushing 16 and thus reinforces the throat 30 and prevents each elongate portion 38 of the flange 34 from collapsing during the service life of the bushing 16. Consequently, a proper seal is maintained between the underside of the bushing block 12 and each elongate portion 38 of the flange 34, thus minimizing the gap between the underside of the bushing block 12 and each elongate portion 38 of the flange 34. This, in turn, reduces the risk of glass leaking between the bushing block 12 and each elongate portion 38 of the flange 32. Any leakage that does occur will be solidified by the cooling coil 40.

## Claims

1. A fiber forming bushing assembly (14) comprising a bushing (16) having a bushing body (21) and a flange (34), the bushing body being defined at least in part by a throat (30) and a side wall (24) beneath the throat, the side wall having an upper portion (44), the flange extending from the throat, the fiber forming bushing assembly being **characterized by** a preformed support (42) formed from a high temperature and high tensile strength material, said support being positioned between the flange and the upper portion of the side wall.

2. A fiber forming bushing assembly according to claim 1, wherein the flange and the upper portion of the side wall extend at an acute angle relative to one another and the support is wedge-shaped.

3. A fiber forming bushing assembly according to claim 1, wherein the support fits within about 0.0625 inch (1.5875 millimeters) of the flange and upper portion of the side wall.

4. A fiber forming bushing assembly according to claim 1, wherein the flange includes an elongate portion (38), the support being positioned between the elongate portion of the flange and the upper portion of the side wall.

5. A fiber forming bushing assembly according to claim 1, further comprising a cooling coil (40) attached to the flange, the support further being positioned between the throat and the cooling coil.

6. A fiber forming bushing assembly according to claim 1, further comprising a frame (18) about the bushing and refractory material (20) between the frame and the bushing.

7. A fiber forming bushing assembly according to claim 6, wherein the refractory material is castable.

8. A fiber forming bushing assembly according to claim 1, wherein the support is formed of a ceramic material.

9. A fiber forming bushing assembly according to claim 1, wherein the support is an elongate wedge.

10. A fiber forming bushing assembly according to claim 1, further comprising elongated side walls and opposing end plates (22), the elongated side walls (24) extending in a longitudinal direction, the end plates (22) extending in a lateral direction, the end plates and side walls being beneath the throat, each side wall having an upper portion (44), the flange extending from the throat, the flange comprising a lateral portion (36) and an elongate portion (38), the fiber forming bushing assembly being **characterized by** a preformed support (42) formed from a high temperature and high tensile strength material, said support being positioned between each of the elongate portions of the flange and the upper portion of a corresponding one of the side walls.

11. A fiber forming bushing assembly according to claim 10, wherein each of the elongate portions of the flange and the upper portion of the corresponding one of the side walls extend at an acute angle relative to one another.

12. A fiber forming bushing assembly according to claim 10, wherein each of the supports fits within about 0.0625 inch (1.5875 millimeters) of the elongate portions of the flange and upper portion of the corresponding one of the side walls.

13. A fiber forming bushing assembly according to claim 10, further comprising a cooling coil (40) mounted to the flange, the support further being positioned between the throat and the cooling coil.

14. A fiber forming bushing assembly according to claim 10, further comprising a frame (18) about the bushing and refractory material (20) between the frame and the bushing.

15. A fiber forming bushing assembly according to claim 14, wherein the refractory material is castable.

16. A fiber forming bushing assembly according to claim 10, wherein the support is formed of a ceramic material.

17. A fiber forming bushing assembly according to claim 10, wherein the support is an elongate wedge.

## Patentansprüche

1. Glasfaserspinndüsenanordnung (14), aufweisend eine Düse (16) mit einem Düsenkörper (21) und einen Flansch (34), wobei der Düsenkörper wenigstens zum Teil durch eine Verengung (30) und eine Seitenwand (24) unterhalb der Verengung definiert ist, die Seitenwand einen oberen Abschnitt (44) aufweist und der Flansch sich von der Verengung erstreckt, wobei die Glasfaserspinndüsenanordnung durch eine vorgeformte Stütze (42), die aus einem Material mit hoher Temperaturbeständigkeit und hoher Zugfestigkeit gebildet ist, **gekennzeichnet** ist und die Stütze zwischen dem Flansch und dem oberen Abschnitt der Seitenwand positioniert ist.

2. Glasfaserspinndüsenanordnung nach Anspruch 1, wobei der Flansch und der obere Abschnitt der Seitenwand sich in einem spitzen Winkel in Bezug aufeinander erstrecken und die Stütze keilförmig ist.

3. Glasfaserspinndüsenanordnung nach Anspruch 1, wobei die Stütze innerhalb von etwa 1,5875 Millimeter (0,0625 Zoll) des Flansches und des oberen Abschnitts der Seitenwand passt.

4. Glasfaserspinndüsenanordnung nach Anspruch 1, wobei der Flansch einen länglichen Abschnitt (38) aufweist und die Stütze zwischen dem länglichen Abschnitt des Flansches und dem oberen Abschnitt der Seitenwand positioniert ist.

5. Glasfaserspinndüsenanordnung nach Anspruch 1, welche ferner eine Kühlspirale (40) aufweist, die an dem Flansch befestigt ist, wobei die Stütze ferner zwischen der Verengung und der Kühlspirale positioniert ist.

6. Glasfaserspinndüsenanordnung nach Anspruch 1, welche ferner einen Rahmen (18) um die Düse und ein feuerfestes Material (20) zwischen dem Rahmen und der Düse aufweist.

7. Glasfaserspinndüsenanordnung nach Anspruch 6, wobei das feuerfeste Material gießbar ist.

8. Glasfaserspinndüsenanordnung nach Anspruch 1, wobei die Stütze aus einem Keramikmaterial gebildet ist.

9. Glasfaserspinndüsenanordnung nach Anspruch 1, wobei die Stütze ein länglicher Keil ist.

10. Glasfaserspinndüsenanordnung nach Anspruch 1, welche ferner längliche Seitenwände und gegenüberliegende Endplatten (22) aufweist, wobei die länglichen Seitenwände (24) sich in einer Längsrichtung erstrecken, die Endplatten (22) sich in einer seitlichen Richtung erstrecken, die Endplatten und die Seitenwände unterhalb der Verengung sind, jede Seitenwand einen oberen Abschnitt (44) aufweist, der Flansch sich von der Verengung erstreckt und der Flansch einen seitlichen Abschnitt (36) und einen länglichen Abschnitt (38) aufweist, wobei die Glasfaserspinndüsenanordnung durch eine vorgeformte Stütze (42), die aus einem Material mit hoher Temperaturbeständigkeit und hoher Zugfestigkeit gebildet ist, **gekennzeichnet** ist und die Stütze zwischen jedem der länglichen Abschnitte des Flansches und dem oberen Abschnitt einer entsprechenden der Seitenwände positioniert ist.

11. Glasfaserspinndüsenanordnung nach Anspruch 10, wobei jeder der länglichen Abschnitte des Flansches und der obere Abschnitt der entsprechenden der Seitenwände sich in einem spitzen Winkel in Bezug aufeinander erstrecken.

12. Glasfaserspinndüsenanordnung nach Anspruch 10, wobei jede der Stützen innerhalb von etwa 1,5875 Millimeter (0,0625 Zoll) der länglichen Abschnitte des Flansches und des oberen Abschnitts der entsprechenden der Seitenwände passt.

13. Glasfaserspinndüsenanordnung nach Anspruch 10, welche ferner eine Kühlspirale (40) aufweist, die an dem Flansch montiert ist, wobei die Stütze ferner zwischen der Verengung und der Kühlspirale positioniert ist.

14. Glasfaserspinndüsenanordnung nach Anspruch 10, welche ferner einen Rahmen (18) um die Düse und ein feuerfestes Material (20) zwischen dem Rahmen und der Düse aufweist.

15. Glasfaserspinndüsenanordnung nach Anspruch 14, wobei das feuerfeste Material gießbar ist.

16. Glasfaserspinndüsenanordnung nach Anspruch 10, wobei die Stütze aus einem Keramikmaterial gebildet ist.

17. Glasfaserspinndüsenanordnung nach Anspruch 10, wobei die Stütze ein länglicher Keil ist.

## Revendications

1. Four-filière de fibrage (14) comprenant une filière (16) comportant un corps de filière (21) et un rebord (34), le corps de filière étant défini au moins en partie par une goulotte (30) et par une paroi latérale (24) située sous la goulotte, la paroi latérale comportant une partie supérieure (44) et le rebord s'étendant à partir de la goulotte, four-filière de fibrage qui est **caractérisé par** un support préformé (42) réalisé à partir d'une matière dotée d'une grande résistance à la chaleur et à la traction, ledit support étant positionné entre le rebord et la partie supérieure de la paroi latérale.

2. Four-filière de fibrage selon la revendication 1, dans lequel le rebord et la partie supérieure de la paroi latérale s'étendent à angle aigu l'un par rapport à l'autre et le support est en forme de coin.

3. Four-filière de fibrage selon la revendication 1, dans lequel le support s'ajuste à environ 0,0625 pouce (1,5875 millimètre) près contre le rebord et la partie supérieure de la paroi latérale.

4. Four-filière de fibrage selon la revendication 1, dans lequel le rebord comprend une partie allongée (38), le support étant positionné entre la partie allongée du rebord et la partie supérieure de la paroi latérale.

5. Four-filière de fibrage selon la revendication 1, comprenant également un serpentin de refroidissement (40) fixé au rebord, le support étant en outre positionné entre la goulotte et le serpentin de refroidissement.

6. Four-filière de fibrage selon la revendication 1, comprenant également un bâti (18) situé autour de la filière et une matière réfractaire (20) disposée entre le bâti et la filière.

7. Four-filière de fibrage selon la revendication 6, dans lequel la matière réfractaire est un béton réfractaire.

8. Four-filière de fibrage selon la revendication 1, dans lequel le support est formé d'une matière céramique.

9. Four-filière de fibrage selon la revendication 1, dans lequel le support est un coin allongé.

10. Four-filière de fibrage selon la revendication 1, comprenant également des parois latérales allongées et des plaques d'extrémité (22) opposées, les parois latérales allongées (24) s'étendant dans une direction longitudinale, les plaques d'extrémité (22) s'étendant dans une direction latérale, les plaques d'extrémité et les parois latérales étant situées au-dessous de la goulotte, chaque paroi latérale comportant une partie supérieure (44), le rebord s'étendant à partir de la goulotte et comprenant une partie latérale (36) et une partie allongée (38), le four-filière de fibrage étant **caractérisé par** un support préformé (42) réalisé à partir d'une matière dotée d'une grande résistance à la chaleur et à la traction, ledit support étant positionné entre chacune des parties allongées du rebord et la partie supérieure d'une paroi latérale correspondante.

11. Four-filière de fibrage selon la revendication 10, dans lequel chacune des parties allongées du rebord et la partie supérieure de la paroi latérale correspondante s'étendent à angle aigu l'une par rapport à l'autre.

12. Four-filière de fibrage selon la revendication 10, dans lequel chacun des supports s'ajuste à environ 0,0625 pouce (1,5875 millimètre) près contre les parties allongées du rebord et la partie supérieure de la paroi latérale correspondante.

13. Four-filière de fibrage selon la revendication 10, comprenant également un serpentin de refroidissement (40) monté sur le rebord, le support étant en outre positionné entre la goulotte et le serpentin de refroidissement.

14. Four-filière de fibrage selon la revendication 10, comprenant également un bâti (18) situé autour de la filière et une matière réfractaire (20) disposée entre le bâti et la filière.

15. Four-filière de fibrage selon la revendication 14, dans lequel la matière réfractaire est un béton réfractaire.

16. Four-filière de fibrage selon la revendication 10, dans lequel le support est formé d'une matière céramique.

17. Four-filière de fibrage selon la revendication 10, dans lequel le support est un coin allongé.
